# EUROPEAN PATENT SPECIFICATION

(11) **EP 1 612 234 B1**
(45) Date of publication and mention of the grant of the patent: **14.10.2009**
(21) Application number: 04799566.7
(22) Date of filing: 10.11.2004
(51) Int. Cl.: C08J 3/20, C08J 9/04, C08L 23/00, C08L 67/00

(54) **PROCESS FOR PRODUCING RESIN COMPOSITION AND RESIN COMPOSITION PRODUCED THEREBY**
HERSTELLUNGSVERFAHREN FÜR EINE HARZZUSAMMENSETZUNG UND AUF DIESE WEISE HERGESTELLTE HARZZUSAMMENSETZUNG
PROCÉDÉ DE PRODUCTION DE COMPOSITION DE RESINE ET COMPOSITION DE RESINE PRODUITE PAR CE PROCESSUS

(30) Priority: 07.01.2004 JP 2004002077
(43) Date of publication of application: 04.01.2006
(73) Proprietor: FA. M INC., Osaka-shi, Osaka 547-0001 (JP)
(72) Inventor: MIYAMA, Shigetoshi c/o fA.M Inc., Osaka-shi, Osaka 547-0001 (JP); OKAMOTO, Yasuhide c/o fA.M Inc., Osaka-shi, Osaka 547-0001 (JP)
(74) Representative: Vossius & Partner
(86) International application number: PCT/JP2004/016661
(87) International publication number: WO 2005/066245

(56) References cited:
- WO-A2-02/055599
- JP-A- 5 287 139
- JP-A- 2003 213 112
- US-A- 3 937 757

## Description

### Technical Field

The present invention relates to a method for manufacturing a resin composition and a resin composition manufactured thereby.

### Background Art

A polyester resin, in particular, a polyethylene terephthalate (PET) resin is light in weight, excellent in strength and transparency, and thus is consumed as beverage bottles in large amount. In Japan, with regard to the recycling of plastics, the policy has shifted toward a recycling-based society, as represented by the institution of Containers and Packaging Recycling Law. As a world-wide trend, the demand for recycling PET bottles will be increased further in the future. However, since a recycled substance, that is, a processed substance of a PET resin has a problem in strength and moldability, improvement of its mechanical property level is required. Moreover, improvement of the mechanical property level of an unused PET resin is required as well, for the case of its recycling in the future.

As one of the methods for improving a mechanical property level of a polyester resin, alloying with other polymer, for example, a polyolefin (PO) resin is attempted. Mechanical properties of the PET resin (used) is improved, for example, by being compatibilized with a polyethylene resin (used) or a polypropylene resin (used) by using an ionomer resin and polymer-alloyed therewith, whereby use of a molded substance of the material is attempted to be broadened (for example, see Patent document 1). However, for wider variety of use of the molded substance, further improvement of the mechanical properties is required.

A polyester resin such as a PET resin is hydrolyzed very easily due to its moisture absorption, which may cause its deterioration in moldability and mechanical property. Therefore, not only when a polyester resin is molded, but also when the polyester resin is material-processed into, for example, a polymer-alloy material, strict control of its contained moisture, that is, a high-level drying step such as vacuum drying is necessary so as to prevent the hydrolyzation of the polyester resin. In particular, in the case of using waste PET bottles that are pulverized into flakes, moisture absorbed therein in a washing step that is conducted after the pulverizing step is removed by hot-air drying but its complete removal is very difficult. Accordingly, the PET resin is hydrolyzed easily, which may lead to deterioration in melt stability and mechanical property.

As a method for removing moisture from a PET resin, a method of using a dehumidifying drier (Patent document 2), a method of supplying an undried PET resin directly into a vent-type injection molding device and removing moisture from a vent port (Patent documents 3 and 4) are proposed. However, these methods have problems where the processes thereof are complicated, a dehumidification effect is degraded because the pressure reduction tends to be insufficient.

Moreover, in the case where a PET resin is melted and kneaded with other resin, a filler, not only the PET resin and the pulverized substances thereof but also the filler or the like must be dried sufficiently so as to prevent the hydrolyzation of the PET resin. Difficulty and cost for the drying are the factors that prevent the development of the utility of recycled PET in various types of alloying, and its improvement in quality and function. In particular, a plant extract-based filler, a natural fiber-based filler, a fine-powdered inorganic filler, a layered inorganic filler have high moisture content ratios and moisture absorption, and thus they have a problem of consuming much time and cost for drying the PET resin for preventing its hydrolyzation.
Patent document 1: JP 2001-220473 A
Patent document 2: JP 11(1999)-123719 A
Patent document 3: JP 6(1994)-315959 A
Patent document 4: JP 7(1995)-60803 A
WO 02 055 599 describes a thermoplastic elastomer composition comprising polypropylene, a rubber vulcanizate, a polyester and a compatibilizer but no moisture.

### Disclosure of Invention

Accordingly, an object of the present invention is to provide a method for manufacturing a resin composition, by which a polyester resin composition with excellent mechanical properties can be manufactured at low cost, and a resin composition manufactured thereby.

In order to solve the above-mentioned problems, the manufacturing method of the present invention is a method for manufacturing a resin composition, wherein the resin composition is manufactured from a raw material composition containing a polyester resin, a polyolefin resin and a compatibilizer, and which includes a kneading step for kneading the raw material composition in the presence of moisture.

[0010] According to the manufacturing method of the present invention, a polyester resin composition with excellent mechanical properties can be manufactured at low cost.

### Description of the Invention

Conventionally, when processing a polyester resin and a composition containing a polyester resin, a drying step for preventing its hydrolyzation is necessary, as mentioned above. And, difficulty and cost for the drying have prevented the improvement of mechanical properties of polyester resin products, in particular, recycled PET resin products, and widening of their use.

However, the inventors of the present invention found that, as a result of their study, when a raw material composition containing a polyester resin, a polyolefin resin and a compatibilizer is kneaded so as to manufacture a resin composition, the raw material composition is not required to be dried, and by virtue of the presence of the moisture, a resin composition with excellent mechanical properties can be obtained. This expertise disproved the conventional common knowledge, removed the anxieties about the moisture content and the moisture absorption of the raw material, and revealed that a polyester resin composition can be manufactured without necessity of the drying step.

In the manufacturing method of the present invention, the reason why the presence of moisture causes the above-described effect is not necessarily clear, but for example, it is thought to be as mentioned below. Due to the presence of moisture, reactivity and affinity of the compatibilizer with the polyester resin and the polyolefin resin are increased, whereby alloying can be promoted further. At the same time, the moisture is consumed by the compatibilizer, thereby suppressing the hydrolyzation of the polyester resin. Accordingly, the resin composition with excellent mechanical properties and moldability can be obtained.

According to the manufacturing method of the present invention, a polyester resin composition with excellent mechanical properties can be manufactured at low cost. Moreover, when molding the resin composition obtained by the manufacturing method of the present invention, all of the drying steps such as strict control of the contained moisture and a vacuum drying step for preventing the hydrolyzation of the resin composition can be omitted. Thereby, a resin product with excellent mechanical properties can be manufactured at low cost.

An embodiment of the present invention will be described below, but the present invention is not limited to this embodiment and can be modified variously unless it deviates from the scope thereof.

The raw material of the resin composition of the present invention contains a polyester resin, a polyolefin resin and a compatibilizer, as described above, but may contain other component besides them as appropriate, unless it deviates from the scope of the present invention. Specific description will be provided below.

The polyester resin, the polyolefin resin and the compatibilizer that can be used in the present invention are not limited particularly, and known polyester resins, polyolefin resins and compatibilizers can be used. However, according to the present invention, since a resin composition with excellent mechanical properties can be obtained easily as mentioned above, for example, a recycled material can be used easily, which conventionally have been difficult to be used, though.

The polyester resin is not limited particularly, and known polyester resins can be used as appropriate, but the polyester resin preferably contains, for example, polyethylene terephthalate (PET). As is well known, PET is a high-molecular-weight thermoplastic polyester having an ester linkage in a principal chain thereof, which is obtained by using terephthalic acid as an acid component and ethylene glycol as a glycol component. Besides, the polyester resin also may be, for example, a polyester resin obtained by using isophthalic acid, orthophthalic acid, naphthalenedicarboxylic acid, oxalic acid, adipic acid, 1,4-cyclohexanedicarboxylic acid as an acid component, and diethylene glycol, propylene glycol, 1,4-butanediol, 1,6-hexanediol, 1,4-cyclohexanedimethanol, bisphenol A, polyethylene glycol, polytetramethylene glycol as a glycol component. These acid components and glycol components may be used alone or as a copolymer of two kinds or more. Specific examples of the polyester resin include polybutylene terephthalate and polycyclohexylenedimethylene terephthalate besides PET. These polyester resins may be used alone or in combination of two kinds or more with different chemical structures, and also may be, for example, a mixture with polyethylene terephthalate (PET) and polybutylene terephthalate (PBT).

A form of the polyester resin is not limited particularly, and may be any forms. For example, commercially available PET for bottles, injection molding, fibers, films, sheets can be used for the PET. Besides, not only unused pellet products but also recycled (processed) substances in flake, pellet, powder, which are represented by a derivative from PET bottles, a chemically-recycled substance can be used, thus not limiting the forms or the processes of use and recycle.

The polyester resin used in the manufacturing method of the present invention may be the unused substance as mentioned above, but it is preferable that the polyester resin contains, for example, a polyester resin derived from a recycled (processed) material, in the light of reduction of manufacturing cost, effective utilization of resources. As mentioned above, in particular, PET bottles conventionally have been prevented from reuse because of the difficulty of their drying, in spite of the large amount collected. However, according to the manufacturing method of the present invention, a polyester resin composition with excellent mechanical properties can be manufactured without a drying step that requires many processes and much cost, and thus, utility values of used PET bottles as resources are expected to be enhanced greatly.

A degree of polymerization of the PET resin used in the present invention is not limited particularly, but a PET with an intrinsic viscosity (25°C, in ortho-chlorophenol) ranging from 0.1 to 1.0 is preferable. In the present invention, in the case of limiting a numeric range, the limitation strictly may be in the numeric range, or roughly (approximately) may be in the numeric range. For example, description of "an intrinsic viscosity ranging from 0.1 to 1.0" means that the intrinsic viscosity may range strictly from 0.1 to 1.0, or may range approximately from 0.1 to 1.0. Similarly, description of "20 parts by weight or less" means that the limitation may be strictly 20 parts by weight or less, or may be approximately 20 parts by weight or less.

In addition, the polyester resin used in the present invention may have high purity, but may contain other resin within a range that does not lose the effect of the present invention considerably. A content of the other resin is not limited particularly, but generally is at a degree that is not beyond a weight of the polyester resin. A kind of the other resin is not also limited particularly, but examples thereof include a styrene resin such as polystyrene and acrylonitrile-butadiene-styrene copolymer (ABS), a thermoplastic resin such as an engineering resin, and a thermosetting resin. Moreover, examples of the polyester resin that can be used in the present invention include a PET resin that is mainly obtained by recycling PET bottles with an improved gas barrier property (also called, for example, PET bottles for hot beverages), a polyamide resin, a polyester resin in which an ethylene-vinylalcohol copolymer resin is mixed or kneaded, PET-based bottles that are obtained by multilaminating these resins with a PET resin or packaged by a shrink film made of these resins, and processed substances and pulverized substances that are made from various kinds of molded substances. Examples of the polyamide resin include Nylon 6, Nylon 66 (Nylon is a trade name owned by Du Pont); and among them, a polyamide resin obtained by polycondensing methaxylylenediamine and adipic acid (also called polyamide MXD6) is often used.

Next, the polyolefin (PO) resin will be described. The PO resin that can be used in the present invention is not limited particularly, and examples thereof include: various kinds of polyethylene such as low density polyethylene (LDPE), linear low density polyethylene (LLDPE) and high density polyethylene (HDPE); polypropylene (PP); poly-1-butene; polyisobutylene; a random copolymer and a block copolymer of propylene and ethylene (they may arbitrarily contain at least one of a monomer that can be copolymerized with propylene and ethylene, and a cross-linkable monomer); an ethylene-propylen-dien terpolymer (a ratio between ethylene and propylene is not limited particularly, and a content of the dien component is not also limited particularly, but is, for example, 50 wt% or less); polymethylpentene; polyolefin including a cyclic structure (for example, a copolymer of cyclopentadiene with at least one of ethylene and propylene); and a random copolymer, a block copolymer and a graft copolymer of at least one of ethylene and propylene with other monomer (for example, a vinyl compound such as vinyl acetate, methacrylic alkylester, acrylic ester, aromatic alkylester and aromatic vinyl, and a content thereof is, for example, 50 wt% or less with respect to an amount of ethylene or propylene). These PO resins may be used alone or in combination of two kinds or more. In the case of using them in combination of two kinds or more, a compatibilizer such as a graft copolymer also can be used with the PO resin as necessary. A method for manufacturing the PO resin is not limited particularly. In addition, stereoregularity of the PO resin is not also limited particularly, and examples thereof include a low-isotactic PO resin, and a high-stereoregularity isotactic or syndiotactic PO resin that is manufactured by using a metallocene catalyst.

The polyolefin resin preferably contains, for example, at least one selected from the group consisting of polyethylene, polypropylene and a copolymer of propylene and ethylene. Among them, the polyolefin resin more preferably contains at least one selected from the group consisting of: polyethylene such as low density polyethylene (LDPE), linear low density polyethylene (LLDPE) and high density polyethylene (HDPE); polypropylene (PP); and a random copolymer and a block copolymer of propylene and ethylene, and particularly preferably contains polyethylene such as low density polyethylene (LDPE), linear low density polyethylene (LLDPE), and high density polyethylene (HDPE).

Moreover, a melt flow rate (MFR) of the PO resin is not limited particularly, but preferably is 50 g / 10 min. or less, and more preferably is 10 g / 10 min. or less. A lower limit of the MFR is not limited particularly, but is, for example, 0.1 g / 10 min. or more.

Next, the compatibilizer will be described. The compatibilizer used in the present invention is not limited particularly, and compatibilizers with any kinds or any structures can be used. As the compatibilizer, for example, a conventional compatibilizer can be used, but in the light of the improvement of a function of the resin composition, it is preferable to use a compatibilizer that is suitable for increasing reactivity, affinity between the polyester resin and the PO resin, compatibilizing and alloying these resins, promoting a reaction between these resins, increasing the affinity therebetween, improving their dispersibility, controlling appropriate forms thereof. The compatibilizer may be used alone or in combination of two kinds or more.

It is preferable that the compatibilizer contains, for example, at least one selected from the group consisting of an ethylene copolymer, an ionomer resin and a denatured hydrogenated polymer component. In addition, in the present invention, the "ethylene copolymer" means a copolymer containing an ethylene-based unsaturated compound. Other copolymer component except the ethylene-based unsaturated compound preferably is, for example, a (denatured) compound containing a polar group such as an acid anhydride group, an epoxy group, a carboxyl group and carboxylate. Moreover, the "ethylene-based unsaturated compound" means a compound including an ethylenic linkage, that is, a carbon-carbon double bond, and examples thereof include ethylene and other compound.

In the ethylene copolymer, examples of the compound copolymerized with the ethylene-based unsaturated compound include: an unsaturated carboxylic acid such as acrylic acid, methacrylic acid, maleic acid, fumaric acid and itaconic acid, and its anhydrate; ester of unsaturated carboxylic acid such as methyl acrylate, methyl methacrylate, dimethyl maleate, monomethyl maleate, diethyl fumarate, dimethyl itaconate, diethyl citraconate and dimethyl tetrahydro phthalic acid; glycidylester of unsaturated monocarboxylic acid such as glycidylacrylate, glycidylmethacrylate and glycidyl p-styryl carboxylate; monoglycidylester or polyglycidylester of unsaturated polycarboxylic acid such as maleic acid, itaconic acid, citraconic acid and butenetricarboxylic acid; and unsaturated glycidylether such as allylglycidylether, 2-methylallylglycidylether and glycidylether of o-allylphenol. Examples of the ethylene-based unsaturated compound include: olefin; vinylester of saturated carboxylic acid with the carbon number of 2 to 6; ester of a saturated alcohol component with the carbon number of 1 to 8 with acrylic acid or methacrylic acid, maleate, methacrylate and fumarate; vinyl halide; styrene; nitryl; vinylether; and acrylamide. More specific examples include ethylene, propylene, butene-1, vinyl acetate, methyl acrylate, ethyl acrylate, methyl methacrylate, diethyl maleate, diethyl fumarate, vinyl chloride, vinylidene chloride, styrene, acrylonitrile, isobutylvinylether and acrylamide. Among them, ethylene and propylene are preferable, and ethylene is particularly preferable.

The ethylene copolymer that is obtained by copolymerizing with, for example, ethylene as a second component and vinyl acetate, methyl acrylate as a third component is preferable, because it further can improve the shock resistance of the resin composition of the present invention. The third component may be used alone or in combination of two kinds or more. An amount thereof to be used is not limited particularly, but is, for example, 20 wt% or less with respect to an amount of the ethylene copolymer, and preferably ranges 5 wt% to 15 wt%. They are generally used as a binary copolymer with an unsaturated epoxy compound or a ternary copolymer containing ethylene and an unsaturated epoxy compound.

Among the ethylene copolymers that can be used for the compatibilizer of the present invention, an ethylene copolymer containing an epoxy group is particularly preferable. In the present invention, the "ethylene copolymer containing an epoxy group" means a copolymer containing an unsaturated epoxy compound and an ethylene-based unsaturated compound as copolymer components. A composition ratio of the ethylene copolymer containing an epoxy group is not limited particularly, but the content of the copolymerized unsaturated epoxy compound ranges, for example, from 0.1 parts by weight to 50 parts by weight with respect to 100 parts by weight of the ethylene-based unsaturated compound, and preferably ranges from 1 part by weight to 30 parts by weight. The ethylene copolymer containing an epoxy group may be used alone and in combination of two kinds or more.

In addition, in the present invention, the "unsaturated epoxy compound" means a compound containing, in its molecule, an unsaturated group that can be copolymerized with an ethylene-based unsaturated compound, and an epoxy group. Examples thereof include unsaturated glycidylester and unsaturated glycidylether. More specific examples include glycidylacrylate, glycidylmethacrylate, glycidyl itaconate, allylglycidylether, 2-methylallylglycidylether and styrene-p-glycidylether. Among them, glycidylmethacrylate is particularly preferable.

Next, the ionomer resin that can be used for the compatibilizer of the present invention is not limited particularly, but examples thereof include ionomer resins with types of: (i) a side chain type containing a side-chain ion group partially on a principal chain of a host polymer; (ii) a telechelic type that is polymerized by neutralizing, with a metal ion, a host polymer or an oligomer containing, for example, carboxylic acid groups at its both ends; and (iii) an ionene type containing a cation on a principal chain thereof, to which an anion is bonded. As a counter ion with respect to the ion group of the host polymer, an alkali metal ion such as Li⁺, Na⁺ and K⁺, an alkaline earth metal ion such as Mg²⁺, Ca²⁺, Sr²⁺ and Ba²⁺, and a transition metal ion such as Zn²⁺, Cu²⁺, Mn²⁺, Ni²⁺, Co²⁺, Co³⁺, Fe³⁺ and Cr³⁺ are used. In addition, as a counter ion with respect to the cation host polymer, for example, a halide ion, in particular, an anion such as Cl⁻, Br⁻ and I⁻ are used. The ionomer resin is not limited particularly, but examples thereof include an ethylene-methacrylic acid copolymer ionomer, an ethylene-acrylic acid copolymer ionomer, a propylene-methacrylic acid copolymer ionomer, a propylene-acrylic acid copolymer ionomer, a butylene-acrylic acid copolymer ionomer, an ethylene-vinylsulfonic acid copolymer ionomer, a styrene-methacrylic acid copolymer ionomer, a sulfonated polystyrene ionomer, a fluorine-based ionomer, a telechelic polybutadiene-acrylic acid ionomer, a sulfonated ethylene-propylene-diene copolymer ionomer, a polypentamer hydride ionomer, a polypentamer ionomer, a poly(vinylpyridinium salt) ionomer, a poly(vinyltrimethylammonium salt) ionomer, a poly(vinylbenzylphosphonium salt) inonomer, a styrene-butadiene-acrylic acid copolymer ionomer, a polyurethane ionomer, a sulfonated styrene-2-acrylamide-2-methylpropane sulfate ionomer, an acid-amine ionomer, an aliphatic ionene and an aromatic ionene. These ionomer resins may be used alone or as a mixture of two kinds or more as necessary. Among these ionomer resins, an ethylene-methacrylic acid copolymer ionomer and an ethylene-acrylic acid copolymer ionomer are preferable.

The denatured hydrogenated polymer component that can be used for the compatibilizer of the present invention is not limited particularly, but examples thereof include hydrogenated styrene-butadiene rubber that is denatured by an acid anhydride group, an epoxy group, a carboxyl group, carboxylate, styrene-ethylenebutylene-polyethylene block copolymer, polyethylene-ethylenebutylene-polyethylene block copolymer, styrene-ethylene-propylene-styrene block copolymer and styrene-ethylene-propylene block copolymer. They may be used alone or in combination of two kinds or more.

Next, according to the manufacturing method of the present invention, other components except the polyester resin, the polyolefin resin and the compatibilizer may be used as appropriate, as mentioned above, but it is preferable that, for example, the raw material composition further contains an additive according to its purpose, and it is more preferable that the additive contains, for example, at least one of a plant tissue-derived component and an inorganic filler. In some cases, the additive further may improve the mechanical properties of the resin composition of the present invention, and also can improve an appearance and dimensional accuracy of a molded substance of the resin composition. Moreover, the additive also can provide new functions such as a coating property, flame resistance and conductivity to the resin composition of the present invention. The additive will be described below more specifically.

Examples of the plant tissue-derived component that can be used for the additive include timber (for example, conifer wood such as pine, Japanese cedar and Japanese cypress, and broad-leaved wood such as Japanese beech, chinquapin and eucalyptus), chaff, pollard, bamboos, paper, waste paper, corrugated fiberboard, pulp, grass, tea leaves, paper packs for containing milk, peanut husks, sugarcane draff, fruit husks, straw, starch, and strained draff of coffee and cocoa obtained during their manufacture. They also may be used after being converted into pulverized substances or fiberized substances by using a pulverizer, an apparatus for manuafacturing dry pulp, a refiner, a grinder, an end mill, a pulper, a splitter or the like, as necessary. Other examples of the plant tissue-derived component include fruit fibers such as palm tree and areca, bast fibers such as paper mulberry, mitsumata, jute and kenaf, Manila hemp, sisal vein fibers and draff of other farm products. These plant tissue-derived components may be used alone or in combination of two kinds or more, and a shape and a size thereof are not limited particularly.

A kind of the plant tissue-derived component may be selected arbitrarily according to a function required for the molded substance of the resin composition of the present invention. For example, for providing a high woody texture to the desired formed molded substance, a wood powder and a chaff powder are preferably used. For obtaining excellent surface appearance of the resin composition, these powders preferably are refined into a size that can pass through a wire mesh of 10 mesh (a mesh width of 2000 µm), more preferably, 50 mesh (a mesh width of 290 µm) or smaller, and further preferably, 100 mesh (a mesh width of 149 µm) or smaller. A lower limit of the size of the powder is not limited particularly, but is, for example, a size that can pass through a wire mesh of 325 mesh (a mesh width of 44 µm) or larger.

In addition, a plant tissue-derived component generally has a hygroscopic property. According to the manufacturing method of the present invention, a resin composition with excellent mechanical properties can be obtained by kneading the raw material composition in the presence of moisture, as mentioned above. However, in the case where a moisture content ratio of the plant tissue-derived component is too large, it may be dried appropriately before the use, as necessary.

In addition, examples of the inorganic filler that can be used for the additive include talc, calcium carbonate, wollastonite, magnesium carbonate, calcium sulfate, barium sulfate, calcium oxide, aluminum oxide, titanium oxide, magnesium oxide, magnesium hydroxide, aluminium hydroxide, mica, glass fibers, glass flakes, glass beads, carbon fibers, carbon black, Ketjen black, CNT (carbon nanotube), graphite, silica, silica fibers, calcium silicate, aluminium silicate, kaoline, graphite fibers, aramid fibers, alumina fibers, silica-alumina fibers, metal powders, metal fibers, potassium titanate whisker, aluminum borate whisker, magnesium whisker, silicon whisker, sepiolite, asbestos, slag fibers, Xonotlite, gypsum fibers, zirconia fibers, boron nitride fibers, silicon nitride fibers, boron fibers, zirconium oxide, iron oxide, barium titanate and terra alba, and they may be used alone or in combination of two kinds or more. For example, magnesium hydroxide, aluminium hydroxide are suitable for providing flame resistance to the resin composition, and carbon black, Ketjen black, CNT (carbon nanotube), carbon fibers are suitable for providing conductivity.

The inorganic filler is used preferably with a binder, a surface treatment agent , as necessary. Examples of the binder and the surface treatment agent include a functional compound such as an epoxy compound, an isocyanate compound, a silane compound and a titanate compound. These compounds may be used for subjecting the inorganic filler to a surface treatment, a binding treatment in advance, or may be added together when preparing the raw material composition.

In addition, the additive may contain, for example, a foaming agent. The foaming agent is not limited particularly, and known foaming agents that are used for manufacturing a resin composition can be used as appropriate. Examples thereof include gases such as carbon dioxide, nitrogen, hydrocarbon (for example, butane, pentane), chlorofluorocarbons and substitute chlorofluorocarbons, supercritical fluids of these gases, thermal decomposable foaming agents such as azodicarbonamide (ADCA), N,N'-dinitrosopentatetramine, azobisisobutyronitrile (AIBN), citric acid and sodium bicarbonate, air and water. These foaming agents may be used alone or in combination of two kinds or more, as necessary. Moreover, these foaming agents may be added as the additive in the raw material composition before or during the kneading, or may be added separately after the kneading, according to kinds, foaming mechanisms thereof. Here, a method for adding the foaming agent is not also limited particularly, but for example, the foaming agent may be mixed or used by impregnation. Furthermore, in the case of using water as the foaming agent, it is preferably added separately after the kneading (after alloying), for example.

Besides, as the additive, known additives that generally are added to a thermoplastic resin also may be used as appropriate so as to provide the resin composition with a desired property according to the purpose thereof. As the additive, for example, various kinds of stabilizers such as an antioxidant, a process stabilizer, a photostabilizer and an ultraviolet absorber, a flame retardant, a plasticizer, a softener, a lubricant, a mold release agent, an antistatic agent, an impact modifier, a colorant such as a dye and a pigment, a crystallization accelerator, a crystal nucleation agent, a preservative, a fungicide, a repellent for ants can be blended. The colorant is not limited particularly, and any colorants may be used. Examples thereof include titanium dioxide, cobalt oxide, ultramarine blue, iron blue, red stuff, vermillion, white lead, red lead, chrome yellow, strontium chromate, titanium yellow, black titanium oxide, zinc chromate, iron black, molybdate orange, molybdenum white, litharge, lithopone, carbon black, emerald green, guinget's green, cadmium yellow, cadmium red, cobalt blue, an azo pigment, phthalocyanine blue, isoindolinone, quinacridon, dioxazine violet and perinone-perylene. They may be used alone or in combination of two kinds or more. Among them, for providing a natural woody texture, yellow titanium oxide, red stuff (iron oxide) are preferable.

In addition, the raw material composition also can contain other thermoplastic resin except the polyester resin and the polyolefin resin (for example, an acrylic resin, a fluorocarbon resin, polyamide, polyphenylene sulfide, polyetheretherketone, polyacetal, polycarbonate, polysulfone, polyphenylene oxide), a thermosetting resin, a soft thermoplastic resin, within a range not deviating from the scope of the present invention.

Next, the manufacturing method of the present invention will be described below more specifically.

The manufacturing method of the present invention may be the same as a conventional method for manufacturing a resin composition except kneading the raw material composition in the presence of moisture, or may be modified as necessary. For example, it can proceed as described below.

Firstly, the polyester resin, the polyolefin resin, the compatibilizer, and the additive or the like as necessary are prepared so as to obtain a raw material composition containing them. A blended amount of the polyester resin in the raw material composition is not limited particularly, but it preferably ranges from 10 wt% to 99.8 wt% with respect to a total weight of the polyester resin, the polyolefin resin and the compatibilizer, more preferably ranges from 20 wt% to 95 wt%, and further preferably ranges from 50 wt% to 95 wt%. The blended amount of the polyester resin is preferable to be in the range from 10 wt% to 99.8 wt%, in the light of moldability, mechanical properties of the resin composition.

A blended amount of the polyolefin (PO) resin in the raw material composition is not limited particularly, but it preferably ranges from 0.1 wt% to 90 wt% with respect to the total weight of the polyester resin, the polyolefin resin and the compatibilizer, more preferably ranges from 5 wt% to 80 wt%, and further preferably ranges from 10 wt% to 50 wt%. The blended amount of the PO resin is preferable to be 0.1 wt% or more in the light of the mechanical properties of the resin composition, and is preferable to be 90 wt% or less in the light of the moldability of the resin composition, stiffness of the molded substance thereof.

A blended amount of the compatibilizer in the raw material composition is not limited particularly, but it preferably ranges from 0.1 wt% to 20 wt% with respect to the total weight of the polyester resin, the polyolefin resin and the compatibilizer, more preferably ranges from 0.5 wt% to 15 wt%, and further preferably ranges from 1 wt% to 10 wt%. The blended amount of the compatibilizer is preferable to be 0.1 wt% or more in the light of the mechanical properties of the resin composition, and is preferable to be 20 wt% or less in the light of manufacturing cost, the moldability of the resin composition.

A blended amount of the additive in the raw material composition is not limited particularly, but it preferably ranges from 1 part by weight to 200 parts by weight with respect to 100 parts by weight of a total weight of the polyester resin, the polyolefin resin and the compatibilizer, more preferably ranges 10 to 100 parts by weight, and further preferably ranges from 15 to 80 parts by weight. The blended amount of the additive is preferable to be 1 part by weight or more in the light of further improvement of the mechanical properties of the resin composition and an effect of providing a new function thereto and is preferably 200 parts by weight or less in the light of the moldability of the resin composition, an appearance of the molded substance thereof.

Next, the raw material composition is kneaded in the presence of moisture so as to obtain the objective resin composition. Kneading conditions and the like will be described below specifically.

In the manufacturing method of the present invention, the components may be mixed so as to prepare the raw material composition, and subsequently be kneaded, alternatively, they may be mixed in the kneading step so as to prepare the raw material composition. Moreover, in the kneading step, the kneading is preferably conducted while at least one of the components of the raw material composition except moisture is added into the raw material composition, as necessary. For example, in the case where the additive contains a foaming agent, the foaming agent may be contained in the raw material composition before the kneading, or may be added during the kneading, according to a kind, a foaming mechanism of the foaming agent, as mentioned above. Furthermore, in some cases, the foaming agent may be added separately after the kneading, which is also as mentioned above.

In the manufacturing method of the present invention, the moisture is not particularly limited in component or temperature, and examples thereof include tap water, well water, industrial water, distilled water, drinking water, natural water, river/lake water, spring water and water vapor. Any of them preferably contain an impurity in minimal amount. Moreover, as the moisture, ice blocks, ice powders, ice particles also may be used. The temperature of the moisture is not limited particularly, and may be a room temperature, but a higher temperature is preferable in the light of enhancement of a function of the compatibilizer, and improvement of an operational function and an efficiency of the kneading device. Specifically, the moisture preferably contains at least one of water at a temperature of 40°C or more and water vapor, and more preferably contains at least one of heated water at a temperature of 80°C or more and water vapor. A method for the kneading also is not limited particularly, but for example, the kneading can be conducted by using, for example, a kneading device that can knead by shearing force. The kneading device is not also limited particularly, but examples thereof include a roll kneader, a banbury mixer, an intermixture, a single screw extruder and a twin screw extruder. Among them, a twin screw extruder is preferable, and a twin screw extruder provided with at least one opening such as a vent is more preferable. Moreover, only one kind of the kneading device may be used, and two or more kinds of the kneading devices may be used so as to knead multiple times.

A method for adding the moisture into the raw material composition also is not limited particularly, and for example, the raw material composition may contain the moisture in advance of proceeding toward the kneading step, and the kneading may be conducted while the moisture is added into the raw material composition in the kneading step. Needless to say, even in the case where the raw material composition contains the moisture in advance, the moisture may be further added as appropriate in the kneading step, as necessary. In particular, in the case of kneading while at least one of the components of the raw material composition except the moisture is added into the raw material composition in the kneading step, the kneading more preferably is conducted while moisture is added into the raw material composition.

An adding amount of the moisture with respect to the raw material composition is not limited particularly, but it is preferably set as appropriate not to be excessively large nor excessively small, for obtaining the effect of the present invention sufficiently. Specifically, in the case where the raw material composition contains the moisture in advance of proceeding toward the kneading step, a content of the moisture in the raw material composition immediately before the proceeding toward the kneading step preferably ranges from 0.01 parts by weight to 20 parts by weight with respect to 100 parts by weight of a total weight of the components of the raw material composition except the moisture, more preferably ranges from 0.01 parts by weight to 10 parts by weight, and further preferably ranges from 0.05 parts by weight to 7 parts by weight. When the content of the moisture is in such a range, the effect of the present invention likely is exhibited sufficiently Moreover, in the case where, for example, an extruder is used as the kneading device, the content of the moisture is preferably 20 parts by weight or less, because a back-flow phenomenon of the moisture toward a rear part of a screw hardly occur.

Furthermore, in the kneading step, in the case of the kneading is conducted while the moisture and at least one of the components of the raw material composition except the moisture are added into the raw material composition, an adding amount of the moisture per 1 hour preferably ranges from 0.01 parts by weight to 20 parts by weight with respect to 100 parts by weight of a total adding amount of the components of the raw material composition except the moisture per 1 hour, more preferably ranges from 0.01 parts by weight to 10 parts by weight, and further preferably ranges from 0.05 parts by weight to 7 parts by weight, because of the same reason. In addition, a method for adding the components of the raw material composition except the moisture may be, for example, a method of supplying them from a material-supplying port of the kneading device such as an extruder. In this case, the adding amount (a supplying amount) of the components of the raw material composition except the moisture may be called a kneading-extruding-discharging amount, or an extruding-discharging amount, alternatively, it simply may be called an extruding amount or a discharging amount.

The preferable range of the adding amount of the moisture with respect to the amount of the raw material composition is as mentioned above, but if this adding amount of the moisture is adjusted as appropriate according to, for example, a blended amount of each component in the raw material composition, the effect of the present invention is particularly likely to be exhibited. When the content of the compatibilizer in the raw material composition is large, the effect of the present invention is more likely to be exhibited with the larger adding amount of the moisture, which is not, however, a general tendency and depends on a specific kind of a material used as each of the components. Moreover, a content of the polyolefin resin also has a correlation with the adding amount of the moisture, which is not as high as the correlation of the compatibilizer with the adding amount of the moisture, and the effect of the present invention is likely to be exhibited with the larger adding amount of the moisture when the content of the polyolefin resin is large.

More specific examples of a method for preparing the raw material composition and adding the moisture therein in the manufacturing method of the present invention include:
(i) a method of mixing a predetermined amount of the moisture into the raw material composition by using a Henschel mixer (trade name owned by MITSUI MINING, CO.,LTD.) or a tumbler in advance, and then supplying the raw material composition into the kneading device;
(ii) a method of, after mixing all of the components of the raw material composition except the moisture by using the Henschel mixer or the tumbler so as to prepare the raw material composition, or while individually supplying predetermined amounts of the respective components of the raw material composition that are weighed by using an (automatic) weighing device, into the kneading device from the material-supplying port thereof, supplying a predetermined amount (an amount appropriate to supplying amounts (extruding-discharging amounts) of all of the components of the raw material composition except the moisture) of the moisture at a constant rate, from the material-supplying port;
(iii) a method of, after mixing all of the components of the raw material composition except the moisture by using the Henschel mixer or the tumbler, or while individually supplying predetermined amounts of the respective components of the raw material composition that are weighed by using the (automatic) weighing device, into the kneading device from the material-supplying port thereof, supplying a predetermined amount (an amount appropriate to supplying amounts (extruding-discharging amounts) of all of the components of the raw material composition except the moisture) of the moisture at a constant rate, from one or more openings such as vents except the material-supplying port;
(iv) a method of, while simultaneously supplying predetermined amounts of the components of the raw material composition except the moisture that are weighed by using the (automatic) weighing device, into the kneading device respectively from the material-supplying port and the other openings of the kneading device, supplying a predetermined amount (an amount appropriate to supplying amounts (extruding-discharging amounts) of all of the components of the raw material composition except the moisture) of the moisture at a constant rate, from the one or more openings such as the vents besides the material-supplying port.

Other kneading conditions except those described above are not limited particularly, and they may be set as appropriate so that each component can be melted and kneaded smoothly, for example. Regarding the temperature setting, an internal temperature of a cylinder of the kneading device during the kneading preferably ranges, for example, from 260°C to 310°C, and more preferably ranges from 270°C to 300°C. In the case where a continuous extruding device such as the twin screw extruder is used as the kneading device, rotation frequency of the screw may be at a level that allows each component to be kneaded sufficiently, but it preferably ranges from 30 rpm to 1000 rpm, and more preferably ranges from 50 rpm to 600 rpm.

As mentioned above, the objective resin composition can be obtained by kneading the raw material composition in the presence of the moisture, but the method for manufacturing the resin composition of the present invention further may include other steps as appropriate. For example, it is preferable further to include a step of molding the resin composition that is obtained by the kneading, as appropriate. A method for molding is not limited particularly, and known methods can be used, but for example, in the case where an extruder is used as the kneading device, the resin composition may be molded by extrusion molding directly after the kneading.

In addition, the method for manufacturing the resin composition of the present invention further may include a step of foaming the raw material composition by adding a foaming agent, after kneading the raw material composition in the presence of the moisture. Alternatively, the raw material composition may contain a foaming agent as an additive, and the foaming agent may be contained in the raw material composition before the kneading, or may be added therein during the kneading, as mentioned above. In this case, the raw material composition may be foamed by being kneaded in the presence of the moisture, or may be foamed after the kneading. A method for foaming the raw material composition in the method for manufacturing the resin composition of the present invention is not limited particularly, but for example, a method of foaming by a supercritical fluid is preferable, and moreover, a method of using at least one of supercritical carbon dioxide and supercritical nitrogen is particularly preferable. Examples of a method for foaming the raw material composition after the kneading include so-called cast foaming.

As mentioned above, the method for manufacturing the resin composition of the present invention can proceed.

According to the manufacturing method of the present invention, the resin composition of the present invention with excellent mechanical properties can be manufactured at low cost, but the manufacturing method is not limited to this, and the resin composition may be manufactured by any methods. Moreover, a form of the resin composition of the present invention also is not limited particularly, and can be any forms. For example, the resin composition can be used in a form similar to that of a known thermoplastic resin composition. For example, in the case where the resin composition of the present invention is a foam, it can be a form such as a foam sheet, a foam board, a foam mat, a foam thick plate, a foam tray and a foam mold.

Use of the resin composition of the present invention is not limited particularly, and it can be used widely for various resin products such as construction materials, living ware, industrial parts, construction materials, agricultural materials, packaging materials, distribution materials, conductive materials, for example. Moreover, in the case where the resin composition of the present invention is a foam, it can be used for, for example, heat insulation materials, buffer materials, lightweight materials, packaging materials, carrying materials, lagging material. The heat insulation material may be, for example, a heat insulation material for construction, a heat insulation material for industrial parts, a heat insulation material for distribution.

### (Examples)

Next, examples of the method for manufacturing the resin composition of the present invention and a resin composition obtained thereby will be described.

### [I] Raw materials

Raw materials of the resin compositions manufactured in the present examples will be listed below.
(1) Polyester resin (Component A)
   A-1: a PET resin manufactured by Mitsubishi Rayon Co., Ltd (trade name: DIANITE "KR582", intrinsic viscosity = 0.65 (at 25°C, in ortho-chlorophenol), unused pellets)
   A-2: flakes obtained by pulverizing commercially available empty PET bottles for containing tea (intrinsic viscosity = 0.70 (at 25°C, in ortho-chlorophenol))
(2) Polyolefin (PO) resin (Component B)
   B-1: linear polyethylene manufactured by Japan Polyethylene Corporation (trade name: "UF440", MFR (190°C) = 1.7 g/min, unused pellets)
(3) Compatibilizer (Component C)
   C-1: an ethylene-glycidylmethacrylate (6 wt%) copolymer, pellets
   C-2: an ethylene-glycidylmethacrylate (12 wt%) copolymer, pellets
   C-3: an ethylene-methacrylic acid copolymer ionomer, pellets
(4) Additive (Component D)
   D-1: a plant tissue-derived component (a pulverized powder of pine, average particle size = 75 mesh (210 µm))
   D-2: an inorganic filler (talc, average particle size = 5µm, pulverized and classified rough stones produced in China, a powder)
(5) Moisture (Component E)
   E-1: water with a room temperature (tap water)
   E-2: heated water at a temperature of 82°C (heated tap water)

### [II] Kneading device

The kneading devices used in the present examples will be described below: BT30 (trade name): manufactured by PLABOR Co., Ltd, a twin screw extruder, a screw diameter of 30 mm; and KTX80 (trade name): manufactured by KOBE STEEL., LTD., a twin screw extruder, a screw diameter of 77 mm.

### [III] Method for evaluating physical properties

Evaluation of physical properties of the resin compositions manufactured in the present examples was conducted by below-described methods.
(1) Preparation of test pieces: the resin compositions manufactured in the present examples were molded so as to obtain JIS standard test pieces (type 1A of JIS-K7162, t = 4 mm), and they were used for the evaluation of the physical properties. Each of the test pieces was prepared by molding (at a molding temperature of 260°C and a temperature of the mold of 80°C) using an injection molding device of type AN100 (trade name) manufactured by NIIGATA ENG CO LTD.
(2) Tensile strength and stretch: a tensile strength and stretch were measured by using Strograph of type VE10D (trade name) manufactured by Toyo Seiki Seisaku-Sho, Ltd. Conditions of the measurement were based on JIS-K7161 and K7162, and it was conducted at a tensile speed of 50 mm/min, a temperature of 23°C and a relative humidity of 50%.
(3) Bending elastic modulus: a bending elastic modulus was measured by using Strograph of type VE10D (trade name) manufactured by Toyo Seiki Seisaku-Sho, Ltd. Conditions of the measurement were based on JIS-K7171, and it was conducted at a bending speed of 2 mm/min, a temperature of 23°C and a relative humidity of 50%.
(4) Izod impact strength: an Izod impact strength was measured by using Digital Impact Tester of type DG-UB (trade name) manufactured by Toyo Seiki Seisaku-Sho, Ltd. Conditions of the measurement were based on JIS-K7110, and it was conducted with a notch, at a temperature of 23°C and a relative humidity of 50%.
(5) Rockwell hardness: Rockwell hardness was measured by using Digital Rockwell Hardness Tester of type E (trade name) manufactured by Toyo Seiki Seisaku-Sho, Ltd. Conditions of the measurement were based on JIS-K7202-2, and it was conducted with a R-scale, at a temperature of 23°C and a relative humidity of 50%.

### (Manufacture of the resin compositions)

Fifteen kinds of the resin compositions were manufactured as described below. They are the resin compositions of Examples 1 to 11 and Comparative Examples 1 to 4, respectively. Firstly, the components of the raw material for manufacturing the respective resin compositions were prepared in ratios as listed below in Table 1. In Table 1, each of the blended amounts of Components A to C is shown in weight% with respect to a total weight of Components A to C. A blended amount of Component D is shown in part by weight with respect to 100 parts by weight of a total weight of Components A to C. And, an adding amount of Component E is an amount thereof to be added per 1 hour during the kneading, and is shown as an adding amount (in part by weight) with respect to 100 parts by weight of a total adding amount of Components A to C (Components A to D in Examples 9 and 10) per 1 hour. In addition, in the case where a kind and a blended amount of a component are not shown in Table 1, it means that the component was not used.

**[Table 1]**

| No. | Polyester resin (Component A) | | PO resin (Component B) | | Compatibilizer (Component C) | | Additive (Component D) | | Moisture (Component E) | | Preliminary dry | Kneading device |
|---|---|---|---|---|---|---|---|---|---|---|---|---|
| | Kind | Blended amount (%) | Kind | Blended amount (%) | Kind | Blended amount (%) | Kind | Blended amount (%) | Kind | Blended amount (%) | | |
| Example 1 | A-1 | 67 | B-1 | 30 | C-1 | 3 | - | - | E-1 | 0.2 | no | BT30 |
| Example 2 | A-1 | 67 | B-1 | 30 | C-1 | 3 | - | - | E-1 | 2 | no | BT30 |
| Example 3 | A-1 | 67 | B-1 | 30 | C-1 | 3 | - | - | E-2 | 2 | no | BT30 |
| Example 4 | A-1 | 82 | B-1 | 15 | C-1 | 3 | - | - | E-1 | 2 | no | BT30 |
| Example 5 | A-1 | 69 | B-1 | 30 | C-1 | 1 | - | - | E-1 | 2 | no | BT30 |
| Example 6 | A-2 | 67 | B-1 | 30 | C-1 | 3 | - | - | E-1 | 2 | no | BT30 |
| Example 7 | A-1 | 67 | B-1 | 30 | C-2 | 3 | - | - | E-1 | 2 | no | BT30 |
| Example 8 | A-1 | 67 | B-1 | 30 | C-3 | 3 | - | - | E-1 | 2 | no | BT30 |
| Example 9 | A-1 | 67 | B-1 | 30 | C-2 | 3 | D-1 | 30 | E-1 | 2 | no | BT30 |
| Example 10 | A-2 | 67 | B-1 | 30 | C-2 | 3 | D-2 | 30 | E-1 | 2 | no | BT30 |
| Example 11 | A-1 | 67 | B-1 | 30 | C-1 | 3 | - | - | E-1 | 2 | no | KTX80 |
| Comparative Example 1 | A-1 | 70 | B-1 | 30 | - | - | - | - | - | - | yes | BT30 |
| Comparative Example 2 | A-1 | 67 | B-1 | 30 | C-1 | 3 | - | - | - | - | yes | BT30 |
| Comparative Example 3 | A-1 | 70 | B-1 | 30 | - | - | - | - | E-1 | 0.1 | yes | BT30 |
| Comparative Example 4 | A-1 | 70 | B-1 | 30 | - | - | - | - | E-1 | 2 | yes | BT30 |

Next, in advance of mixing and kneading each component, Component A-1 was dried at 120°C for 10 hours in Comparative Examples 1 to 4. In Examples 1 to 11, each component was not dried preliminary. In Examples 1 to 11 and Comparative Examples 1 to 4, Component A, Component B and Component C (Component C was not used in Comparative Examples 1, 3 and 4) in a ratio as shown in Table 1 were mixed sufficiently by using a tumbler mixer. The thus obtained mixture was melted and kneaded at 280°C while being added into the kneading and extruding device of BT30 (KTX80 only in Example 11) at a certain rate, and then was granulated, thereby obtaining the objective resin composition as pellets. Here, in Examples 9 and 10, predetermined amounts of Components D-1 and D-2 respectively were supplied from different supplying ports simultaneously by using an automatic supplying device. Moreover, in Examples 1 to 11 and Comparative Examples 3 and 4, the melt, the kneading and the granulation proceeded, while a predetermined amount of the moisture (Component E) was poured from the material-supplying port by using a metering pump (manufactured by TOKYO RIKAKIKAI CO, LTD).

### (Evaluation of physical,properties)

Pellets of each resin composition obtained as described above were supplied into the injection molding device and were molded so as to prepare a test piece for evaluation, which was used for the evaluation. Here, for the injection molding, the pellets were not dried preliminary. Results of the evaluation will be shown below in Table 2.

**[Table 2]**

| No. | Tensile strength MPa | Tensile extensibility % | Bending elastic modulus MPa | Izod impact strength J/m | Rockwell hardness - |
|---|---|---|---|---|---|
| Example 1 | 30.6 | 211 | 1136 | 59 | 83 |
| Example 2 | 31.4 | 315 | 1156 | 63 | 85 |
| Example 3 | 31.3 | 336 | 1154 | 65 | 84 |
| Example 4 | 30.9 | 253 | 1178 | 60 | 84 |
| Example 5 | 32.1 | 183 | 1316 | 51 | 86 |
| Example 6 | 31.3 | 307 | 1157 | 59 | 84 |
| Example 7 | 31.2 | 401 | 1155 | 67 | 83 |
| Example 8 | 30.1 | 197 | 1150 | 51 | 83 |
| Example 9 | 31.1 | 13 | 1833 | 30 | 87 |
| Example 10 | 30.1 | 65 | 2005 | 41 | 85 |
| Example 11 | 31.1 | 320 | 1155 | 63 | 84 |
| Comparative Example 1 | 31.3 | 6 | 1244 | 41 | 83 |
| Comparative Example 2 | 29.2 | 61 | 1160 | 55 | 82 |
| Comparative Example 3 | 30.9 | 7 | 1242 | 39 | 83 |
| Comparative Example 4 | 31.1 | 5 | 1240 | 33 | 84 |

As shown in Table 2, all of the resin compositions of Examples 1 to 11 showed excellent mechanical properties. In particular, the resin compositions of Examples 1 to 8 and 11 were exceedingly superior in tensile extensibility, which determines tenacity of materials. Specifically, values of the tensile extensibility of the resin compositions of Examples 1 to 8 and 11 were exceedingly high, which were approximately 3 to 6.5 times as high as that of the resin composition of Comparative Example 2 in which the compatibilizer (Component C) was added but moisture (Component E) was not added. Other mechanical properties of the resin compositions of Examples 1 to 8 and 11 were also equivalent to, or higher than those of Comparative Example 2.

Moreover, the resin compositions of Examples 9 and 10, in which the additive (Component D) was added, showed mechanical properties that were mostly superior to those of Comparative Example 2. In particular, bending elastic moduli of the resin compositions of Examples 9 and 10 were much higher than that of Comparative Example 2. Thus, it was found that the resin compositions of Examples 9 and 10, in which large amounts of the plant tissue-derived component and the inorganic filler were added, were provided with mechanical properties superior to those of a conventional resin composition, in which none of the plant tissue-derived component and the inorganic filler was added. In particular, from the fact that the resin composition of Example 10, in which the inorganic filler (talc) was added, also showed a value of tensile extensibility superior to that of Comparative Example 2, it can be expected that the resin composition of the present invention can be used for various purposes that require stiffness and high tenacity.

In addition, each of the resin compositions of Examples 7, 9 and 10 was molded by using a deformed extruder for polyvinyl chloride so as to obtain a long-sized model plate for a construction material (outline dimensions: width of 120 mm × average thickness of 2 mm). The thus obtained long-sized model plate for a construction material had excellent appearance, surface hardness, strength and dimensional precision, by virtue of the excellent moldability of the resin composition. As mentioned above, the present invention can provide, for example, a resin composition with excellent mechanical properties and the like, which can be used as a substitute of polyvinyl chloride because of having similar moldability to that of polyvinyl chloride.

### Industrial Applicability

As described above, the present invention can provide a method for manufacturing a polyester resin composition with excellent mechanical properties at low cost, and a resin composition manufactured thereby. Use of the resin composition of the present invention is not limited particularly, and it can be used widely for various kinds of resin products. In particular, the present invention can provide a resin composition with excellent mechanical properties, moldability, appearance, strength and dimensional stability precision, which further has excellent applicability to molding equipment for polyvinyl chloride. Such a resin composition also can be used as various kinds of construction materials and valuable materials for living ware, industrial parts. Moreover, according to the present invention, since a resin composition also can be manufactured from a recycled PET resin material such as crushed PET bottles that are generated in large amount, as a main raw material, a material manufacturing technique and materials obtained thereby that are also important in terms of the environmental protection can be provided.

## Claims

1. A method for manufacturing a resin composition,
wherein the resin composition is manufactured from a raw material composition containing a polyester resin, a polyolefin resin and a compatibilizer, and
which comprises a kneading step for kneading the raw material composition in the presence of moisture.

2. The manufacturing method according to Claim 1, wherein the polyester resin contains polyethylene terephthalate (PET).

3. The manufacturing method according to Claim 1, wherein the polyester resin contains a polyester resin derived from a recycled (processed) material.

4. The manufacturing method according to Claim 1, wherein the weight of the polyester resin in the raw material composition ranges from 10 wt% to 99.8 wt% with respect to the total weight of the polyester resin, the polyolefin resin and the compatibilizer.

5. The manufacturing method according to Claim 1, wherein the polyolefin resin contains at least one selected from the group consisting of polyethylene, polypropylene and a copolymer of propylene and ethylene.

6. The manufacturing method according to Claim 1, wherein the weight of the polyolefin (PO) resin in the raw material composition ranges from 0.1 wt% to 90 wt% with respect to the total weight of the polyester resin, the polyolefin resin and the compatibilizer.

7. The manufacturing method according to Claim 1, wherein the compatibilizer contains at least one selected from the group consisting of an ethylene copolymer, an ionomer resin and a denatured hydrogenated polymer component.

8. The manufacturing method according to Claim 1, wherein the weight of the compatibilizer in the raw material composition ranges from 0.1 wt% to 20 wt% with respect to the total weight of the polyester resin, the polyolefin resin and the compatibilizer.

9. The manufacturing method according to Claim 1, wherein the raw material composition further contains an additive.

10. The manufacturing method according to Claim 9, wherein the additive contains at least one of a plant tissue-derived component and an inorganic filler.

11. The manufacturing method according to Claim 9, wherein the weight of the additive in the raw material composition ranges from 1 part by weight to 200 parts by weight with respect to 100 parts by weight of the total weight of the polyester resin, the polyolefin resin and the compatibilizer.

12. The manufacturing method according to Claim 1, wherein the raw material composition contains moisture in advance of proceeding toward the kneading step.

13. The manufacturing method according to Claim 12, wherein the content of the moisture in the raw material composition immediately before the proceeding toward the kneading step ranges from 0.01 parts by weight to 20 parts by weight with respect to 100 parts by weight of the total weight of the components of the raw material composition except the moisture.

14. The manufacturing method according to Claim 1, wherein, in the kneading step, the kneading is conducted while moisture is added into the raw material composition.

15. The manufacturing method according to Claim 1, wherein, in the kneading step, the kneading is conducted while at least one of the components of the raw material composition except moisture is added into the raw material composition.

16. The manufacturing method according to Claim 15,
wherein, in the kneading step, the kneading is conducted while moisture is added into the raw material composition, and
the adding amount of the moisture per 1 hour ranges from 0.01 parts by weight to 20 parts by weight with respect to 100 parts by weight of the total adding amount of the components of the raw material composition except the moisture per 1 hour.

17. The manufacturing method according to Claim 1, wherein the moisture contains at least one of water at a temperature of 40°C or more and water vapor.

18. The manufacturing method according to Claim 9, wherein the additive contains a foaming agent.

19. The manufacturing method according to Claim 18, wherein the raw material composition is foamed by being kneaded in the presence of moisture.

20. The manufacturing method according to Claim 18, wherein the raw material composition is foamed after the kneading.

21. The manufacturing method according to Claim 1, further comprising a step of foaming the raw material composition by adding a foaming agent, after kneading the raw material composition in the presence of the moisture.

22. A resin composition, which is obtainable by the manufacturing method according to any of claims 1 to 21.

23. The resin composition according to Claim 22, which is a foam.

24. The resin composition according to Claim 23, which is a foam sheet, a foam board, a foam mat, a foam thick plate, a foam tray or a foam mold.

25. A resin product, which is obtainalde by using the resin composition according to Claim 22.

## Patentansprüche

1. Ein Verfahren zur Herstellung einer Harzzusammensetzung, wobei die Harzzusammensetzung aus einer Rohmaterialzusammensetzung hergestellt ist, die ein Polyesterharz, ein Polyolefinharz und ein Kompatibilisierungsmittel umfasst und welches einen Schritt des Knetens zum Kneten der Rohmaterialzusammensetzung in Gegenwart von Feuchtigkeit umfasst.

2. Das Herstellungsverfahren gemäß Anspruch 1, wobei das Polyesterharz Polyethylenterephthalat (PET) enthält.

3. Das Herstellungsverfahren gemäß Anspruch 1, wobei das Polyesterharz ein von einem recycelten (verarbeiteten) Material herrührendes Polyesterharz enthält.

4. Das Herstellungsverfahren gemäß Anspruch 1, wobei das Gewicht des Polyesterharzes in der Rohmaterialzusammensetzung im Bereich von 10 Gew.-% bis 99,8 Gew.-% in Bezug auf das Gesamtgewicht des Polyesterharzes, des Polyolefinharzes und des Kompatibilisierungsmittels, liegt.

5. Das Herstellungsverfahren gemäß Anspruch 1, wobei das Polyolefinharz mindestens eines, ausgewählt aus der Gruppe bestehend aus Polyethylen, Polypropylen und einem Copolymer von Propylen und Ethylen, enthält.

6. Das Herstellungsverfahren gemäß Anspruch 1, wobei das Gewicht des Polyolefin(PO)harzes in der Rohmaterialzusammensetzung im Bereich von 0,1 Gew.-% bis 90 Gew.-% in Bezug auf das Gesamtgewicht des Polyesterharzes, des Polyolefinharzes und des Kompatibilisierungsmittels, liegt.

7. Das Herstellungsverfahren gemäß Anspruch 1, wobei das Kompatibilisierungsmittel mindestens eines, ausgewählt aus der Gruppe bestehend aus einem Ethylencopolymer, einem Ionomerharz und einer denaturierten hydrogenierten Polymerkomponente, enthält.

8. Das Herstellungsverfahren gemäß Anspruch 1, wobei das Gewicht des Kompatibilisierungsmittels in der Rohmaterialzusammensetzung im Bereich von 0,1 Gew.-% bis 20 Gew.-% in Bezug auf das Gesamtgewicht des Polyesterharzes, des Polyolefinharzes und des Kompatibilisierungsmittels liegt.

9. Das Herstellungsverfahren gemäß Anspruch 1, wobei die Rohmaterialzusammensetzung des Weiteren einen Hilfsstoff enthält.

10. Das Herstellungsverfahren gemäß Anspruch 9, wobei der Hilfsstoff mindestens eine aus einem aus Pflanzengewebe abgeleitete Komponente und einen anorganischen Füllstoff enthält.

11. Das Herstellungsverfahren gemäß Anspruch 9, wobei das Gewicht des Hilfsstoffs in der Rohmaterialzusammensetzung im Bereich von 1 Gewichtsteil bis 200 Gewichtsteilen in Bezug auf 100 Gewichtsteile des Gesamtgewichts des Polyesterharzes, des Polyolefinharzes und des Kompatibilisierungsmittels liegt.

12. Das Herstellungsverfahren gemäß Anspruch 1, wobei die Rohmaterialzusammensetzung Feuchtigkeit enthält, bevor sie zum Schritt des Knetens geführt wird.

13. Das Herstellungsverfahren gemäß Anspruch 12, wobei sich der Gehalt an Feuchtigkeit in der Rohmaterialzusammensetzung unmittelbar bevor sie zum Schritt des Knetens geführt wird im Bereich von 0,01 Gewichtsteilen bis 20 Gewichtsteilen in Bezug auf 100 Gewichtsteile des Gesamtgewichts der Komponenten der Rohmaterialzusammensetzung, außer der Feuchtigkeit, liegt.

14. Das Herstellungsverfahren gemäß Anspruch 1, wobei im Schritt des Knetens das Kneten durchgeführt wird, während Feuchtigkeit in die Rohmaterialzusammensetzung zugegeben wird.

15. Das Herstellungsverfahren gemäß Anspruch 1, wobei im Schritt des Knetens das Kneten durchgeführt wird, während mindestens eine der Komponenten der Rohmaterialzusammensetzung, außer Feuchtigkeit, in die Rohmaterialzusammensetzung zugegeben wird.

16. Das Herstellungsverfahren gemäß Anspruch 15, wobei im Schritt des Knetens das Kneten durchgeführt wird, während Feuchtigkeit in die Rohmaterialzusammensetzung zugegeben wird, und die Zugabemenge an Feuchtigkeit pro 1 Stunde im Bereich von 0,01 Gewichtsteile bis 20 Gewichtsteile in Bezug auf 100 Gewichtsteile der gesamten Zugabemenge der Komponenten der Rohmaterialzusammensetzung, außer der Feuchtigkeit, pro 1 Stunde, liegt.

17. Das Herstellungsverfahren gemäß Anspruch 1, wobei die Feuchtigkeit mindestens eines von Wasser mit einer Temperatur von 40°C oder mehr und Wasserdampf enthält.

18. Das Herstellungsverfahren gemäß Anspruch 9, wobei der Hilfsstoff ein Schäummittel enthält.

19. Das Herstellungsverfahren gemäß Anspruch 18, wobei die Rohmaterialzusammensetzung durch Kneten in der Gegenwart von Feuchtigkeit geschäumt wird.

20. Das Herstellungsverfahren gemäß Anspruch 18, wobei die Rohmaterialzusammensetzung nach dem Kneten geschäumt wird.

21. Das Herstellungsverfahren gemäß Anspruch 1, des Weiteren umfassend einen Schritt des Schäumens der Rohmaterialzusammensetzung durch Hinzufügen eines Schäummittels nach dem Kneten der Rohmaterialzusammensetzung in der Gegenwart der Feuchtigkeit.

22. Eine Harzzusammensetzung, welche durch das Herstellungsverfahren gemäß einem der Ansprüche 1 bis 21 erhältlich ist.

23. Die Harzzusammensetzung gemäß Anspruch 22, welche ein Schaum ist.

24. Die Harzzusammensetzung gemäß Anspruch 23, welche eine Schaumbahn, eine Schaumplatte, eine Schaummatte, eine dicke Schaumplatte, eine Schaumwanne oder eine Schaumform ist.

25. Ein Harzprodukt, welches durch Verwenden der Harzzusammensetzung gemäß Anspruch 22 erhältlich ist.

## Revendications

1. Procédé pour fabriquer une composition de résine,
dans lequel la composition de résine est fabriquée à partir d'une composition de matières premières contenant une résine de polyester, une résine de polyoléfine et un agent compatibilisant, et
qui comprend une étape de malaxage pour malaxer la composition de matières premières en présence d'humidité.

2. Procédé de fabrication selon la revendication 1, dans lequel la résine de polyester contient du poly(téréphtalate d'éthylène) (PET).

3. Procédé de fabrication selon la revendication 1, dans lequel la résine de polyester contient une résine de polyester dérivée d'un matériau recyclé (transformé).

4. Procédé de fabrication selon la revendication 1, dans lequel le poids de résine de polyester dans la composition de matières premières est situé dans la plage allant de 10 % en poids à 99,8 % en poids par rapport au poids total de la résine de polyester, la résine de polyoléfine et l'agent compatibilisant.

5. Procédé de fabrication selon la revendication 1, dans lequel la résine de polyoléfine contient au moins une polyoléfine choisie dans le groupe constitué par le polyéthylène, le polypropylène et un copolymère de propylène et d'éthylène.

6. Procédé de fabrication selon la revendication 1, dans lequel le poids de résine de polyoléfine (PO) dans la composition de matières premières est situé dans la plage allant de 0,1 % en poids à 90 % en poids par rapport au poids total de la résine de polyester, la résine de polyoléfine et l'agent compatibilisant.

7. Procédé de fabrication selon la revendication 1, dans lequel l'agent compatibilisant contient au moins un agent choisi dans le groupe constitué par un copolymère d'éthylène, une résine ionomère et un composant polymère hydrogéné dénaturé.

8. Procédé de fabrication selon la revendication 1, dans lequel le poids d'agent compatibilisant dans la composition de matières premières est situé dans la plage allant de 0,1 % en poids à 20 % en poids par rapport au poids total de la résine de polyester, la résine de polyoléfine et l'agent compatibilisant.

9. Procédé de fabrication selon la revendication 1, dans lequel la composition de matières premières contient en outre un additif.

10. Procédé de fabrication selon la revendication 9, dans lequel l'additif contient au moins l'un parmi un composant dérivé d'un tissu végétal et une charge inorganique.

11. Procédé de fabrication selon la revendication 9, dans lequel le poids d'additif dans la composition de matières premières est situé dans la plage allant de 1 partie en poids à 200 parties en poids pour 100 parties en poids du poids total de la résine de polyester, la résine de polyoléfine et l'agent compatibilisant.

12. Procédé de fabrication selon la revendication 1, dans lequel la composition de matières premières contient de l'humidité avant de commencer l'étape de malaxage.

13. Procédé de fabrication selon la revendication 12, dans lequel la teneur en humidité de la composition de matières premières juste avant de commencer l'étape de malaxage est située dans la plage allant de 0,01 partie en poids à 20 parties en poids pour 100 parties en poids du poids total des composants de la composition de matières premières à l'exception de l'humidité.

14. Procédé de fabrication selon la revendication 1, dans lequel, dans l'étape de malaxage, le malaxage est mis en oeuvre pendant que de l'humidité est ajoutée dans la composition de matières premières.

15. Procédé de fabrication selon la revendication 1, dans lequel, dans l'étape de malaxage, le malaxage est mis en oeuvre pendant qu'au moins l'un des composants de la composition de matières premières à l'exception de l'humidité est ajouté dans la composition de matières premières.

16. Procédé de fabrication selon la revendication 15,
dans lequel, dans l'étape de malaxage, le malaxage est mis en oeuvre pendant que de l'humidité est ajoutée dans la composition de matières premières, et la quantité d'humidité ajoutée par 1 heure est située dans la plage allant de 0,01 partie en poids à 20 parties en poids pour 100 parties en poids de la quantité totale de composants de la composition de matières premières à l'exception de l'humidité ajoutée par 1 heure.

17. Procédé de fabrication selon la revendication 1, dans lequel l'humidité contient au moins l'une parmi de l'eau à une température de 40 °C ou plus et de la vapeur d'eau.

18. Procédé de fabrication selon la revendication 9, dans lequel l'additif contient un agent moussant.

19. Procédé de fabrication selon la revendication 18, dans lequel la composition de matières premières est expansée en étant malaxée en présence d'humidité.

20. Procédé de fabrication selon la revendication 18, dans lequel la composition de matières premières est expansée après le malaxage.

21. Procédé de fabrication selon la revendication 1, comprenant en outre une étape d'expansion de la composition de matières premières par ajout d'un agent moussant, après malaxage de la composition de matières premières en présence d'humidité.

22. Composition de résine qui peut être obtenue par le procédé de fabrication selon l'une quelconque des revendications 1 à 21.

23. Composition de résine selon la revendication 22, qui est une mousse.

24. Composition de résine selon la revendication 23, qui est une feuille de mousse, un panneau de mousse, une natte de mousse, une plaque épaisse de mousse, un plateau de mousse ou un moule de mousse.

25. Produit en résine, qui peut être obtenu utilisant la composition de résine selon la revendication 22.
